# EUROPEAN PATENT APPLICATION

(11) **EP 4 826 351 A1**
(43) Date of publication of application: **21.10.2026**
(21) Application number: 24875710.6
(22) Date of filing: 30.07.2024
(51) Int. Cl.: G01M 13/04

(54) **STATE DIAGNOSIS SYSTEM, STATE DIAGNOSIS METHOD, AND PROGRAM**

(30) Priority: 13.12.2023 JP 2023210073
(71) Applicant: NSK Ltd., Tokyo 141-8560 (JP)
(72) Inventor: KITAUCHI, Seishiro, Fujisawa-shi, Kanagawa 2518501 (JP)
(74) Representative: Grünecker Patent- und Rechtsanwälte PartG mbB
(86) International application number: PCT/JP2024/027143
(87) International publication number: WO 2025/126550

(57) **Abstract**

A state diagnosis system includes an acquisition unit configured to acquire an image including a diagnosis target; a specifying unit configured to specify, using a learned model configured to receive the image and output a damaged portion and a type of damage of the diagnosis target included in the image, the damaged portion and the type of damage in the image acquired by the acquisition unit; and an output unit configured to output the image acquired by the acquisition unit and the damaged portion and the type of damage specified by the specifying unit in association with each other.

## Description

### TECHNICAL FIELD

The present invention relates to a state diagnosis system, a state diagnosis method, and a program.

### BACKGROUND ART

In the related art, various parts are used in a mechanical device, and a stable operation of the mechanical device is realized by appropriately managing states of the parts. With respect to the mechanical device, the state diagnosis of the part is performed by visual recognition or the like of an operator, and the replacement or repair is performed after confirming the state of the part.

Such an operation depends on the skill and experience of the operator, and thus it is not easy to diagnose the state of the mechanical device. With respect to this, for example, Patent Literature 1 discloses a method of acquiring a captured image of an external part of a vehicle and determining damage to the external part using a part learning model and a state learning model. Patent Literature 2 discloses a method of acquiring an image of a tread surface of a tire and diagnosing a degree of uneven wear of the tire using a learned AI.

### CITATION LIST

### PATENT LITERATURE

Patent Literature 1: JP6991519B
Patent Literature 2: JP2023-55602A

### SUMMARY OF INVENTION

### TECHNICAL PROBLEM

For example, a bearing device is taken as an example of the mechanical device that allows parts to be replaced. There are various states of damage to each part of the bearing device. In order to perform a more appropriate state diagnosis, other state information may be required in addition to the appearance of the part. For example, if the operator is a skilled person, it is possible to perform determination of additional measurement or information acquisition as to what kind of point should be confirmed in addition to the currently acquired information. Further, if the operator is a skilled person, it is also possible to determine which one of replacement and repair of the part is suitable in the state at the current time point. However, there is a case in which the operator or the like who is poor in experience cannot sufficiently determine what kind of handling should be performed during the state diagnosis. In such a case, the technique disclosed in Patent Literature 1 or the like cannot be used as it is.

In view of the above problems, an object of the present invention is to implement a state diagnosis method for a mechanical device that can be easily introduced and has higher usability.

### SOLUTION TO PROBLEM

In order to solve the above problems, the present invention has the following configuration. That is, a state diagnosis system includes: an acquisition unit configured to acquire an image including a diagnosis target; a specifying unit configured to specify, using a learned model configured to receive the image and output a damaged portion and a type of damage of the diagnosis target included in the image, the damaged portion and the type of damage in the image acquired by the acquisition unit; and an output unit configured to output the image acquired by the acquisition unit and the damaged portion and the type of damage specified by the specifying unit in association with each other.

Further, another aspect of the present invention has the following configuration. That is, a state diagnosis method includes: an acquisition step of acquiring an image including a diagnosis target; a specifying step of specifying, using a learned model configured to receive the image and output a damaged portion and a type of damage of the diagnosis target included in the image, the damaged portion and the type of damage in the image acquired in the acquisition step; and an output step of outputting the image acquired in the acquisition step and the damaged portion and the type of damage specified in the specifying step in association with each other.

Further, another aspect of the present invention has the following configuration. That is, a program causes a computer to execute: an acquisition unit configured to acquire an image including a diagnosis target; a specifying unit configured to specify, using a learned model configured to receive the image and output a damaged portion and a type of damage of the diagnosis target included in the image, the damaged portion and the type of damage in the image acquired by the acquisition unit; and an output unit configured to output the image acquired by the acquisition unit and the damaged portion and the type of damage specified by the specifying unit in association with each other.

### ADVANTAGEOUS EFFECTS OF INVENTION

According to the present invention, it is possible to implement a state diagnosis method for a mechanical device that can be easily introduced and has higher usability.

### BRIEF DESCRIPTION OF DRAWINGS

[FIG. 1] FIG. 1 is a schematic diagram illustrating an example of a system configuration according to an embodiment of the present invention.
[FIG. 2] FIG. 2 is a flowchart of real time diagnosis processing according to the embodiment of the present invention.
[FIG. 3] FIG. 3 is a flowchart of detailed diagnosis processing according to the embodiment of the present invention.
[FIG. 4] FIG. 4 is a diagram illustrating a configuration example of a UI during image acquisition according to the embodiment of the present invention.
[FIG. 5] FIG. 5 is a diagram illustrating a configuration example of a UI for a state diagnosis according to the embodiment of the present invention.
[FIG. 6] FIG. 6 is a diagram illustrating a configuration example of a UI for the state diagnosis according to the embodiment of the present invention.
[FIG. 7] FIG. 7 is a diagram illustrating examples of contents for an additional measurement according to the embodiment of the present invention.
[FIG. 8] FIG. 8 is a diagram illustrating an example of a correspondence table for the state diagnosis according to the embodiment of the present invention.
[FIG. 9] FIG. 9 is a diagram illustrating an example of a correspondence table for the state diagnosis according to the embodiment of the present invention.

### DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problem of the present invention. In the drawings, the same components are denoted by the same reference numerals, thereby illustrating a correspondence relationship therebetween.

In the following description, "learning" or "machine learning" indicates that a "learned model" is generated by repeatedly performing learning processing using learning data and any learning algorithm. The learned model is updated as appropriate based on the progress of learning using a plurality of pieces of learning data, and the output thereof changes even with the same input. Therefore, the learned model is not limited to a state at any time point. Here, a model used in learning is referred to as a "learning model", and a learning model in which a certain degree of learning is performed is referred to as a "learned model".

A specific example of the "learning data" will be described later, whereas a configuration thereof may be adjusted and changed according to a learning algorithm to be used, the use of the learning algorithm, and a type of a device serving as a diagnosis target. For example, in addition to image data to be described later, data such as vibration data, sound data, ultrasonic data, and numerical data may be used as the learning data. The configuration of the learning data and preprocessing for the learning data may vary depending on a type of the learning algorithm and input/output contents of the learning model.

The learning data may include labeled training data used for learning, verification data used for verification of a learned model, and test data used for testing the learned model. In the following description, "learning data" is described when data related to learning is comprehensively indicated. The present invention is not intended to clearly classify the labeled training data, the verification data, and the test data included in the learning data, and for example, according to a learning method, a verification method, and a test method, all the learning data may become the labeled training data.

### <First Embodiment>

Hereinafter, a first embodiment of the present invention will be described. In the present embodiment, a bearing device is described as an example of the diagnosis target. However, the present invention is applicable to a device in which a diagnosis such as replacement and repair of parts as described later is performed.

### [System Configuration]

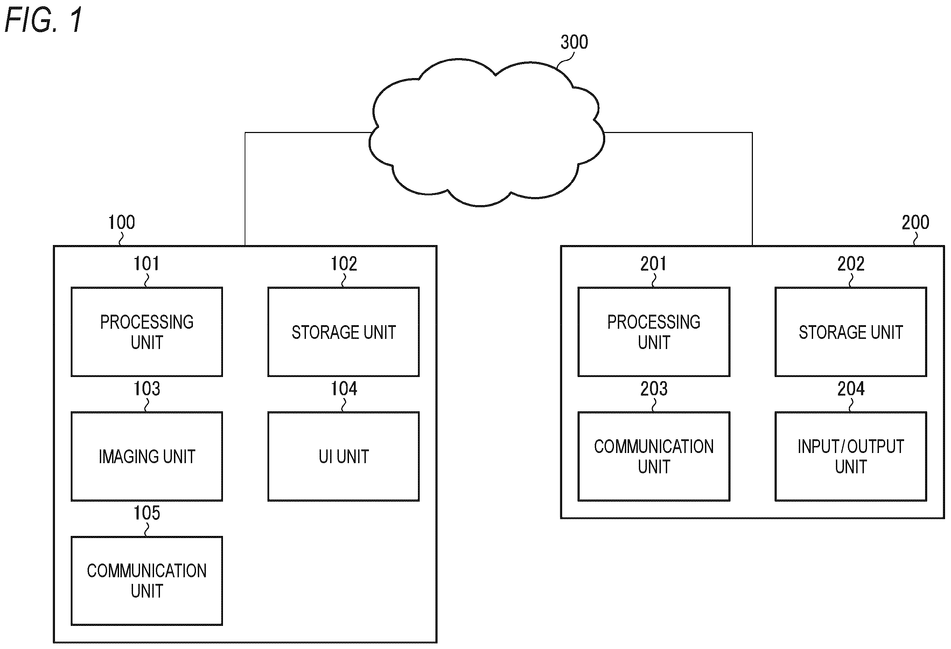

Hereinafter, an aspect of a system to which a method according to the present embodiment can be applied will be described. FIG. 1 is a schematic diagram illustrating an example of a system configuration according to the present embodiment. As illustrated in FIG. 1, the system according to the present embodiment includes a terminal device 100 and a server device 200, and are communicably connected to each other via a network 300. The present embodiment describes an example in which there are one terminal device 100 and one server device 200, but the present invention is not limited thereto. The present embodiment may be provided with a plurality of the terminal devices 100 and the server devices 200, each sharing and collaborating on various types of processing according to their respective functions.

The terminal device 100 is a device that can be used around the bearing device (not illustrated) serving as a diagnosis target, and may be, for example, a smartphone, a tablet terminal, a POS terminal, or a dedicated device. The terminal device 100 includes a processing unit 101, a storage unit 102, an imaging unit 103, a user interface (UI) unit 104, and a communication unit 105. The processing unit 101 may include a central processing unit (CPU), a graphical processing unit (GPU), a general-purpose computing on graphics processing units (GPGPU), a micro-processing unit (MPU), a digital signal processor (DSP), a field-programmable gate array (FPGA), and a dedicated circuit.

The storage unit 102 includes volatile and nonvolatile storage media such as a hard disk drive (HDD), a read only memory (ROM), a random access memory (RAM), and a flash memory, and may input and output various types of information in response to an instruction from the processing unit 101. The imaging unit 103 is, for example, a camera, and can acquire a real time image and a still image of the bearing device serving as the diagnosis target. The UI unit 104 displays a UI screen described later and receives an operation from a user. The UI unit 104 may include, for example, a touch panel display. The communication unit 105 is a communication interface that controls communication with an external device (for example, the server device 200). A communication standard used by the communication unit 105 via the network 300 is not particularly limited, and a plurality of communication standards may be combined.

The server device 200 is an information processing device for providing functions to be described later in cooperation with the terminal device 100. The server device 200 may be implemented as an on-premise type within an environment in which the terminal device 100 is used, or may be implemented as a cloud type on the Internet. The network 300 may be implemented by combining, for example, a local area network (LAN), a wide area network (WAN), and the Internet.

The server device 200 includes a processing unit 201, a storage unit 202, a communication unit 203, and an input/output unit 204. The processing unit 201 may include a CPU, a GPU, a GPGPU, an MPU, a DSP, an FPGA, and a dedicated circuit. For example, the processing unit 201 of the server device 200 may be suitable for learning processing for generating a learned model to be described later.

The storage unit 202 includes volatile and nonvolatile storage media such as an HDD, a ROM, and a RAM, and may input and output various types of information in response to an instruction from the processing unit 201. The communication unit 203 is a communication interface that controls communication with an external device (for example, the terminal device 100). A communication standard used by the communication unit 203 via the network 300 is not particularly limited, and a plurality of communication standards may be combined. The input/output unit 204 is an interface for inputting and outputting various types of data and instructions.

In the system according to the present embodiment, it is assumed that an operator (for example, an administrator of the rolling device) performs a state diagnosis of the rolling device using the terminal device 100. The functions to be described later may be provided by cooperation between the terminal device 100 and the server device 200. The sharing of the processing described below is an example, and a subject of the processing may be changed according to an application environment or the like. The functions to be described later may be implemented as an application installed in the terminal device 100 or may be implemented as a Web application provided by the server device 200. Alternatively, the functions to be described later may be implemented as a combination thereof.

In general, the learning processing for generating a learned model has a large processing load. Therefore, it is assumed that the learned model used in the present embodiment is generated by performing the learning processing at a predetermined timing on a server device 200 side. At this time, the server device 200 appropriately collects learning data and repeats the learning processing. The server device 200 holds and manages a plurality of learned models corresponding to the degree of learning and the type of the rolling device serving as the diagnosis target. Then, the server device 200 provides the learned model to the terminal device 100 at a predetermined timing, and the terminal device 100 becomes able to use the learned model during diagnosis processing.

The learned model according to the present embodiment is a learned model in which learning processing is performed such that an image including a part constituting the rolling device is received, and a damaged portion of the part and a type of damage are specified and output from the image. Although the learning algorithm is not particularly limited, for example, a known deep learning method such as a region convolutional neural network (R-CNN), you only look once (YOLO), or a single-shot multibox detector (SSD) may be used.

In addition, as the learning data used in the learning processing, data in which annotation data indicating the damaged portion and the type of damage is associated with the image data is used. The learning data may be generated manually or may be generated using a predetermined tool. The generation of the learning data may be performed by a known method, and a detailed description thereof is omitted here.

### [Processing Flow]

Hereinafter, state diagnosis processing according to the present embodiment will be described. The state diagnosis according to the present embodiment is divided into diagnosis processing using the real time image and detailed diagnosis processing using the captured still image. Each will be described below.

### (Real Time Diagnosis Processing)

In the real time diagnosis processing, the operator activates the imaging unit 103 of the terminal device 100, and captures an image of an external appearance of the rolling device or its part serving as the diagnosis target as a real time image. Then, information relating to a damage generated in the imaged rolling device is superimposed and displayed on the real time image. Further, various notifications are made according to an imaging state of the real time image. Hereinafter, the UI screen and a flowchart will be described.

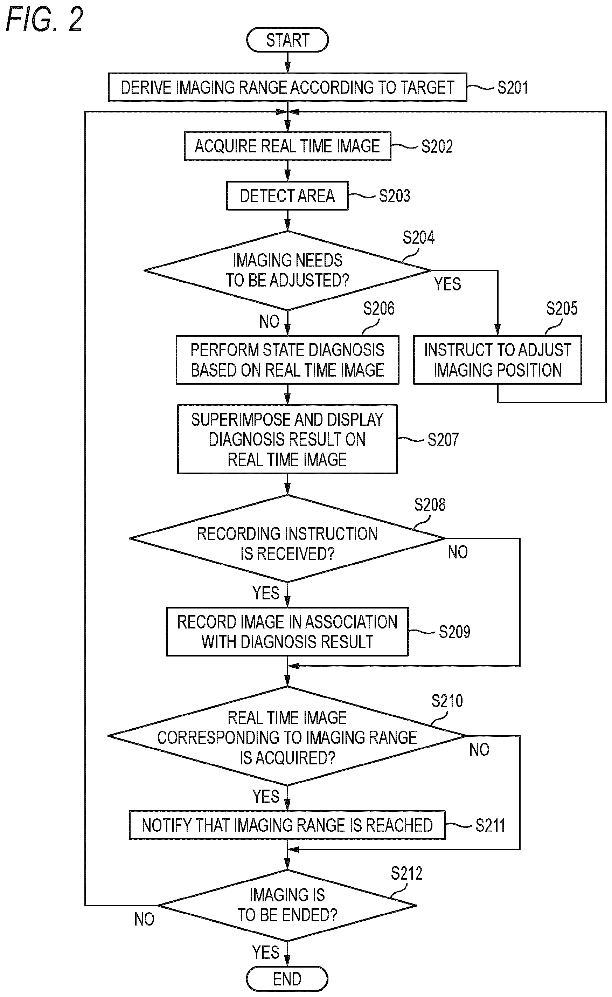

FIG. 2 is a flowchart of the real time diagnosis processing according to the present embodiment. The processing flow is implemented by the processing unit 101 of the terminal device 100 reading and executing various programs and data stored in the storage unit 102. Before the processing is started, the learned model is made available in the learning processing performed by the server device 200. When the processing flow is started, the imaging unit 103 of the terminal device 100 is activated.

In S201, the terminal device 100 derives an imaging range according to the diagnosis target. For example, the information relating to the diagnosis target may be acquired by receiving specification of a product type, an individual part, or the like via the UI screen described later. Then, the terminal device 100 derives the range to be imaged during the state diagnosis based on the information relating to the diagnosis target. The imaging range may be, for example, a target area to be imaged, such as a surface of a rolling element constituting the rolling device, or a rolling surface of an inner ring or an outer ring. In addition, the imaging range may be a range of one lap of the rolling surface, or may be the number of still images to be imaged.

In S202, the terminal device 100 acquires the real time image via the imaging unit 103. The real time image is continuously acquired while the imaging unit 103 is activated. At this time, the terminal device 100 may display, on the UI screen displayed on the UI unit 104, information relating to an imaging target, information related to navigation (frame or the like) based on the imaging range derived in S201.

In S203, the terminal device 100 inputs the real time image acquired in S202 to the learned model, and detects an area of a target part. The learned model used here may be selected from a plurality of models based on the information (product type, and the like) specified in S201.

In S204, the terminal device 100 determines whether the imaging needs to be adjusted based on the output from the learned model. Specifically, when it is determined that the area serving as the diagnosis target cannot be detected from the real time image as a result of the output of the learned model, it may be determined that the imaging needs to be adjusted. When it is determined that the imaging needs to be adjusted (YES in S204), the processing of the terminal device 100 proceeds to S205. Meanwhile, when it is determined that the imaging does not need to be adjusted (NO in S204), the processing of the terminal device 100 proceeds to S206.

In S205, the terminal device 100 displays an instruction on the UI screen of the UI unit 104 to adjust imaging conditions so that the diagnosis target is included in the real time image. The imaging conditions may be, for example, an angle of view, an orientation, a brightness, and a distance, and the operator is prompted to perform the adjustment. The instruction in this case may be performed by displaying characters, icons, and the like. Thereafter, the processing of the terminal device 100 returns to S202 and the processing continues.

In S206, the terminal device 100 performs the state diagnosis of the rolling device based on the real time image using the output from the learned model. Information relating to the state of the part output from the learned model is referred to as state information for convenience. The state information may include, for example, a position and a type of a corresponding abnormality. The type of abnormality may be flaking, peeling, wear, or the like, or there may be a diagnosis result indicating that there is no abnormality.

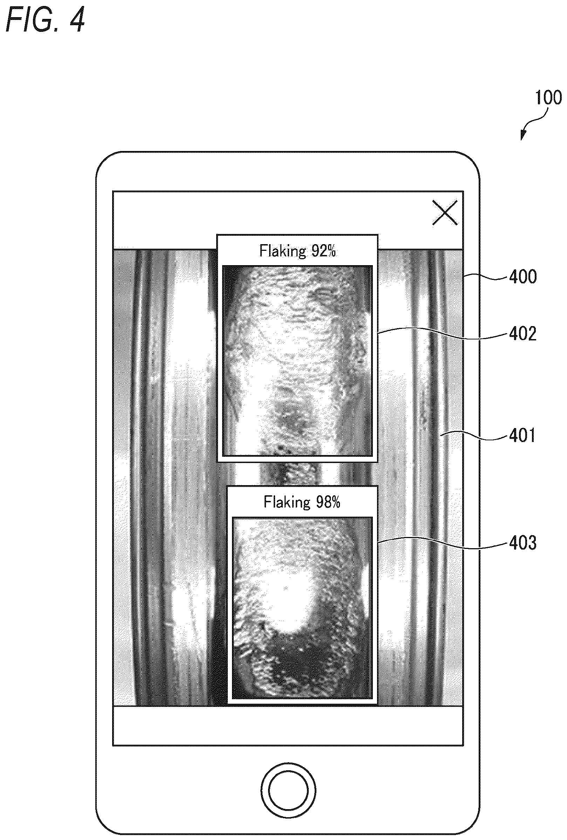

In S207, the terminal device 100 superimposes and displays the diagnosis result on the real time image. FIG. 4 illustrates a configuration example of a UI screen 400 displayed in this step. Details of the UI screen 400 will be described later.

In S208, the terminal device 100 determines whether an instruction to record the diagnosis result is received. The recording instruction may be received, for example, by pressing a button or the like provided in the terminal device 100. When the recording instruction is received (YES in S208), the processing of the terminal device 100 proceeds to S209. Meanwhile, when the recording instruction is not received (NO in S208), the processing of the terminal device 100 proceeds to S210.

In S209, the terminal device 100 records the real time image as a still image in association with a state diagnosis result (state information) in S206. The state information may include product information of the diagnosis target, time information when the image is captured, and the like. Thereafter, the processing of the terminal device 100 proceeds to S210.

In S210, the terminal device 100 determines whether an image corresponding to the imaging range derived in S201 is acquired. The image may be the real time image or the still image captured in S209. For example, the imaging target is the inner ring of the rolling device. In this case, if an imaging range requiring at least two images from different angles of the inner ring is derived in S201, it is determined in S209 whether two or more still images are recorded. Alternatively, if an imaging range requiring a real time image of one lap of the inner ring is derived in S201, it is determined in S202 whether the real time image of one lap of the inner ring is acquired. The acquisition of the predetermined range according to the real time image may be determined based on, for example, a mark provided at a predetermined position of the inner ring. Alternatively, the acquisition may be determined whether point cloud data corresponding to one lap of the inner ring is acquired based on point cloud data obtained using a distance sensor or the like included in the terminal device 100. When the image corresponding to the predetermined imaging range is acquired (YES in S210), the processing of the terminal device 100 proceeds to S211. Meanwhile, when the image corresponding to the predetermined imaging range is not acquired (NO in S210), the processing of the terminal device 100 proceeds to S212.

In S211, the terminal device 100 displays on the UI screen of the UI unit 104 that the diagnosis target reaches the predetermined imaging range. Thereafter, the processing of the terminal device 100 proceeds to S212.

In S212, the terminal device 100 determines whether imaging is to be ended. For example, when an instruction to end imaging is received from the operator via the UI unit 104, it may be determined that imaging is to be ended. When imaging is to be ended (YES in S212), the processing flow ends. Meanwhile, when imaging is not to be ended (NO in S212), the processing of the terminal device 100 returns to S202 and the processing is repeated.

### (Detailed Diagnosis Processing)

In the detailed diagnosis processing, a detailed diagnosis result is presented using the still image captured in the real time diagnosis processing or the like. In the present embodiment, an example is described in which the still image is captured in the real time diagnosis processing illustrated in FIG. 2. The present invention is not limited thereto, and a still image of a part acquired in advance may be used as a diagnosis target.

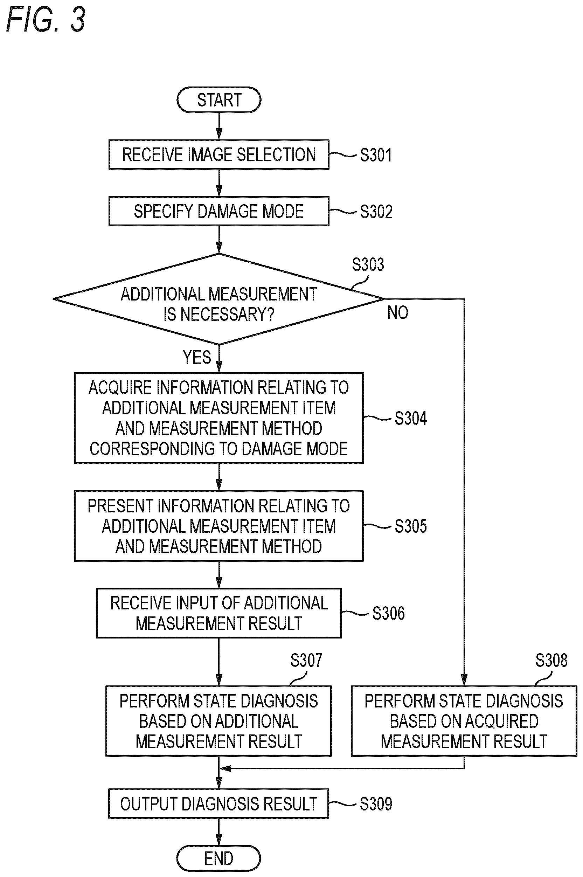

FIG. 3 is a flowchart of the detailed diagnosis processing according to the present embodiment. The processing flow is implemented by the processing unit 101 of the terminal device 100 reading and executing various programs and data stored in the storage unit 102.

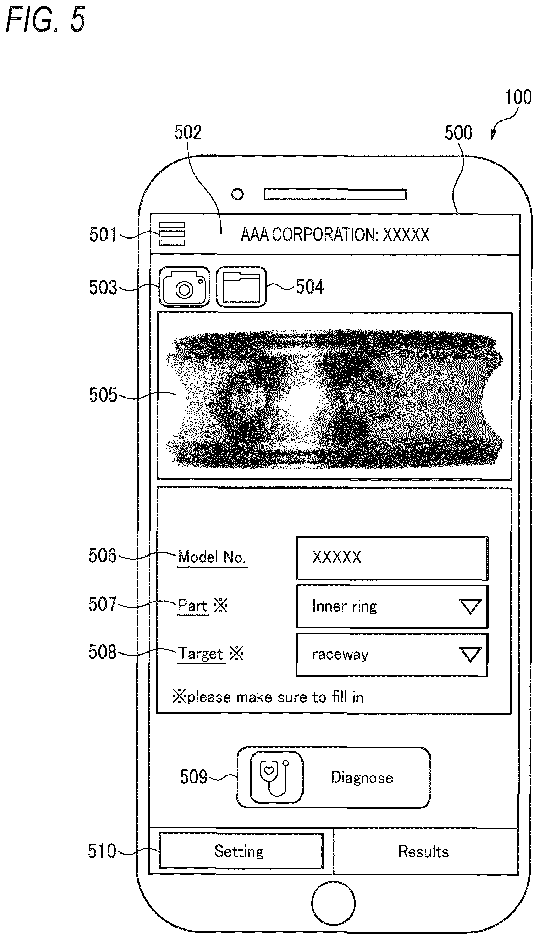

In S301, the terminal device 100 receives a selection of an image serving as a diagnosis target via the UI screen displayed on the UI unit 104. Further, the terminal device 100 receives information relating to the selected image. FIG. 5 illustrates a configuration example of a UI screen 500 for receiving a selection of an image. Details of the UI screen 500 will be described later.

In S302, the terminal device 100 specifies a damage mode based on state information associated with the image selected in S301. Here, the state information corresponds to the state information output from the learned model in S206 illustrated in FIG. 2. When there is no state information associated with the selected still image, the state information may be newly acquired using the learned model that receives the selected still image. As the damage mode, for example, "flaking", "peeling", or "wear" may be specified.

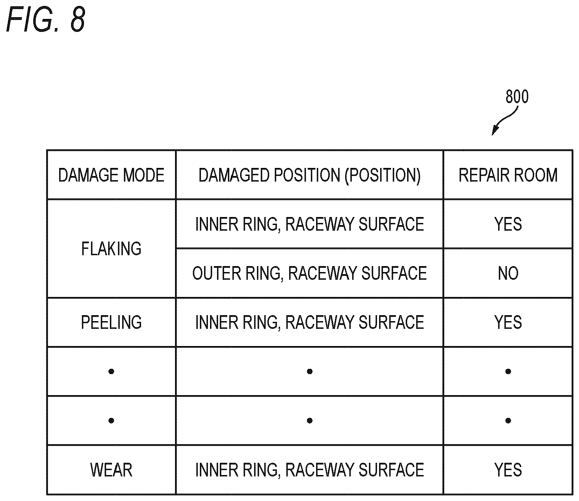

In S303, the terminal device 100 determines whether additional measurement is necessary based on the damage mode specified in S302. For example, depending on the damage mode, a more detailed state diagnosis can be performed by performing additional measurement of the diagnosis target. Meanwhile, depending on the damage mode, the content to be handled by the operator may be determined without additional measurement. In the present embodiment, a table is used in which necessity of additional measurement is defined in advance according to the specified damage mode and a damaged position. FIG. 8 illustrates an example of a correspondence table 800 used in this step. In this example, either "repair" or "replacement" is performed for a damaged part. "Reuse" can be performed for a part that is not damaged. In a case of a damage mode in which there is room for repair, additional measurement is performed. Such handling is an example, and the handling may be defined according to the characteristics of the diagnosis target. For example, in a case in which replacement is more cost-effective than repair for a certain part, the correspondence table 800 or the like may be defined to prioritize replacement. When additional measurement is necessary (YES in S303), the processing of the terminal device 100 proceeds to S304. Meanwhile, when additional measurement is not necessary (NO in S303), the processing of the terminal device 100 proceeds to S308.

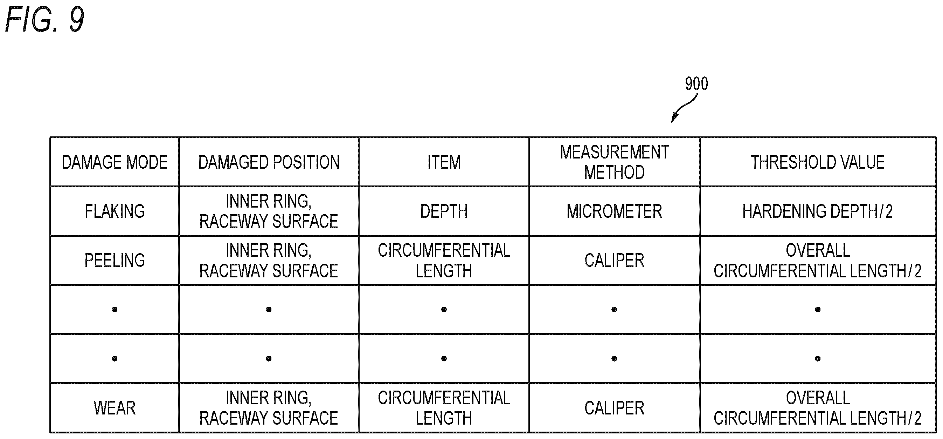

In S304, the terminal device 100 acquires information relating to an additional measurement item and a measurement method corresponding to the damage mode. The information is defined in advance in association with the damage mode, and in the present embodiment, a correspondence table is used. FIG. 9 illustrates an example of a correspondence table 900 used in this step. Further, the information relating to the measurement method includes information for clearly indicating a specific way of the measurement. Specific examples thereof include a video illustrating the measurement and an image illustrating a measurement position.

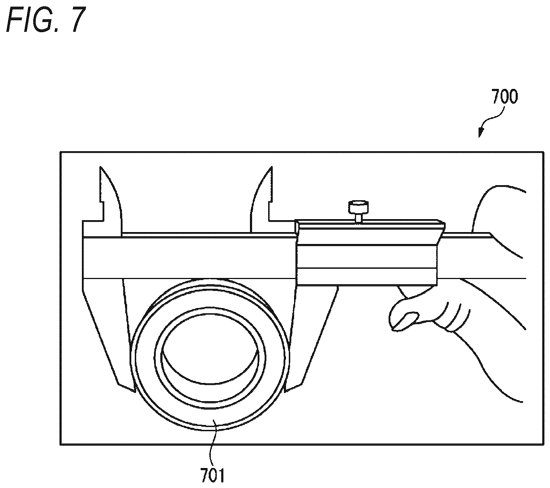

FIG. 7 illustrates an example of a specific moving image 700 during measurement. For example, it is assumed that the flaking mode is "peeling" and the damaged position is "inner ring, raceway surface". In this case, the additional measurement item is "circumferential length" and the measurement method is "caliper" in the correspondence table 900. With respect to this, a threshold value is also specified. The threshold value is used in step S307 described later. Then, a moving image in which an example of additional measurement using a caliper is recorded is specified as the lecture information for clearly indicating the specific way of the measurement. The moving image 700 illustrated in FIG. 7 is an example in which a target object 701 is measured at a desired position (item) using a caliper. The lecture information such as the moving image 700 is registered in advance according to the additional measurement, the diagnosis target, or the like.

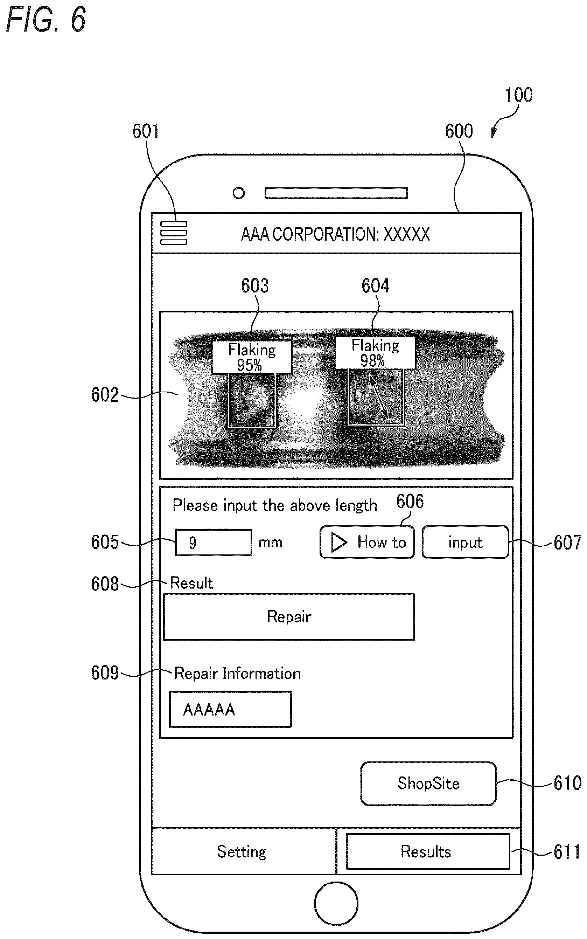

In S305, the terminal device 100 presents the various types of information acquired in S304 via the UI screen of the UI unit 104. FIG. 6 illustrates a configuration example of a UI screen 600 displayed in this step. Details of the UI screen 600 will be described later.

In S306, the terminal device 100 receives an input of a result of the additional measurement via the UI screen 600. That is, the operator inputs an actual measurement value obtained by the additional measurement through the UI screen 600.

In S307, the terminal device 100 performs the state diagnosis using the input result of the additional measurement. In the present embodiment, the content to be handled is specified using the threshold value corresponding to the damage mode acquired in S304 and the actual measurement value of the additional measurement received in S306. For example, the repair is performed when the actual measurement value is smaller than the threshold value, and the replacement is performed when the actual measurement value is equal to or larger than the threshold value. The handling of the threshold value acquired in S304 may be different depending on the type of the part or may be different depending on the damage mode.

In S308, the terminal device 100 performs the state diagnosis using the acquired measurement result. Here, the processing is processing without additional measurement, and for example, the damage mode and the handling content (in this example, the "replacement" of the diagnosis target) may be specified as the state diagnosis result.

In step S309, the terminal device 100 outputs a diagnosis result of step S307 or S308 via the UI screen of the UI unit 104. FIG. 6 illustrates an example of the UI screen 600 displayed in this step. Details of the UI screen 600 will be described later. Then, the processing flow ends.

### (UI Screen)

Configuration examples of UI screens displayed on the terminal device 100 according to the present embodiment will be described with reference to FIGS. 4 to 6. FIG. 4 illustrates a configuration example of the UI screen displayed during the real time image diagnosis processing illustrated in FIG. 2. FIGS. 5 and 6 each illustrate a configuration example of the UI screen displayed during the detailed diagnosis processing illustrated in FIG. 3.

In the UI screen 400 illustrated in FIG. 4, a real time image of an inner ring 401 of a rolling device serving as the diagnosis target is displayed. By inputting the real time image to the learned model as described above, a damaged area and a type thereof (damage mode) are specified. In this example, two damaged positions and the damage mode "flaking" are specified on a rolling surface of the inner ring 401. Then, icons 402 and 403 indicating the information specified on the real time image are displayed in a superimposed manner.

By displaying the result of the state diagnosis in real time as in the UI screen 400, the operator can easily grasp an overview of the state of the diagnosis target. Although omitted in FIG. 4, the instructions and notifications in steps S205 and S211 illustrated in FIG. 2 may be superimposed and displayed on the UI screen 400. An imaging instruction in S208 illustrated in FIG. 2 may be received using a related imaging function equipped in the terminal device 100. As one type of the related imaging function, a display related to dimension display or enlargement/reduction may be superimposed on the real time image.

Next, the UI screens used in the detailed diagnosis processing will be described. The UI screen 500 illustrated in FIG. 5 includes a menu button 501. When the menu button 501 is selected, a selection screen (not illustrated) for selecting a rolling device serving as the diagnosis target is displayed. Information of the rolling device selected on the selection screen (not illustrated) is displayed on a bar 502. In this selection screen, a list of products that can be diagnosed is displayed, and the selection screen may be implemented in a manner of allowing the operator to make a selection. The information input on the selection screen may be used in the real time diagnosis processing, such as being acquired in step S201 illustrated in FIG. 2. In this example, "AAA Corporation" indicating the manufacturer of the rolling device and "XXXXX" indicating the product information are displayed in the bar 502.

When a camera icon 503 is selected, the screen transitions to the UI screen 400 illustrated in FIG. 4. That is, the real time diagnosis processing may be performed when the camera icon 503 is selected. When a folder icon 504 is selected, a selection screen (not illustrated) for selecting the still image already captured is displayed. In this selection screen, a still image captured during the real time diagnosis processing may be made available for selection.

A still image 505 indicates a still image selected as an image serving as the diagnosis target. In this example, a still image of the inner ring of the rolling device is selected and displayed. Settings 506, 507, and 508 are parameters for setting detailed information of the diagnosis target by the operator. In this example, a model number of the rolling device is input to the setting 506. In the setting 507, a type of a part constituting the rolling device, that is, a type of a part indicated by the still image 505 is input. A portion serving as the diagnosis target of the part is input to the setting 508. In this example, the model number "XXXXX", the part "inner ring", and the diagnosis target "rolling surface" are input. The setting may be implemented to be selectable in a list format, or may be implemented to allow manual input. The number and type of items of setting may differ depending on products or the like.

When a diagnosis button 509 is pressed, the detailed diagnosis processing is executed. That is, the processing after S302 illustrated in FIG. 3 is started. A status icon 510 indicates a current status of the detailed diagnosis processing, and here, "Setting" indicating a state of receiving the setting input may be illustrated by lighting or the like.

In the UI screen 600 illustrated in FIG. 6, a menu button 601 is the same as the menu button 501 of the UI screen illustrated in FIG. 5. A diagnosis result image 602 displays the state information in association with the still image 505 illustrated in FIG. 5. In this example, two damaged areas and the damaged mode "flaking" are specified, and are indicated by icons 603 and 604.

In this example, the additional measurement is necessary. A field 605 is an item for inputting the actual measurement value of the additional measurement. When a method button 606 is pressed, an additional measurement method is displayed. Specifically, the moving image 700 as illustrated in FIG. 7 is displayed. The content displayed when the method button 606 is pressed differs depending on the content of the additional measurement. When the actual measurement value is input into the field 605 and an input button 607 is pressed, the state diagnosis is performed using the actual measurement value of the additional measurement. This corresponds to the step of S307 illustrated in FIG. 3. Then, a result of the state diagnosis is displayed on a result 608. When the additional measurement is determined to be not necessary, the field 605, the method button 606, and the input button 607 may be controlled to be hidden. When a plurality of additional measurements are necessary, a plurality of the fields 605 and the method buttons 606 may be displayed corresponding to the respective additional measurements. When it is determined that there is no abnormality in the state diagnosis, the result 608 may display such a result or "Reuse".

Handling information 609 indicates information related to handling performed based on the result of the state diagnosis. For example, when "Repair" is notified in the result 608, the information related to the obtained effect may be displayed by actually performing the repair. Specifically, the information indicated in the handling information 609 may include information related to the environment (such as the CO2 reduction amount) or cost (the difference between the repair and the replacement).

When a transition button 610 is pressed, a transition is made to a Web site in which a part serving as a repairing target can be purchased, or to a Web site of a person who undertakes the replacement work. The transition destination may be switched based on the product information input via the UI screen. A status icon 611 indicates a current status of the detailed diagnosis processing, and here, "Results" illustrating a state in which the diagnosis result is output may be illustrated by lighting or the like.

The configurations of the UI screens illustrated in FIGS. 4 to 6 are examples, and the present invention is not limited thereto. For example, an item to be displayed may be changed according to a product serving as the diagnosis target.

In the configuration illustrated in FIG. 3, when the additional measurement is determined to be necessary in the step of S303, the state diagnosis is performed after the actual measurement value obtained by the additional measurement is input. However, the present invention is not limited to this configuration. For example, even when the additional measurement is determined to be necessary, the state diagnosis may be performed based on the information acquired at that time to output a simple diagnosis result.

For example, in a case in which a length of damage needs to be additionally measured with a caliper, if the dimension of damage can be estimated from the acquired still image, moving image, or the like, a simple diagnosis result may be output using the estimated dimension of damage. This allows the operator to grasp the result of the state diagnosis at that time before the additional measurement is performed. This is useful for, for example, a case in which the additional measurement is cumbersome or time-consuming.

The correspondence tables 800 and 900 illustrated in FIGS. 8 and 9 may be held on the terminal device 100 side or may be held on the server device 200 side. When the terminal device 100 makes an inquiry to the server device 200 during the diagnosis, information defined in the correspondence tables 800 and 900 may be referred to in the database. In addition, information relating to the result of the state diagnosis, for example, information such as the moving image 700 may be acquired by the terminal device 100 making an inquiry to the server device 200.

According to the present embodiment, it is possible to implement a state diagnosis method for a mechanical device that can be easily introduced and has higher usability. In particular, even a person that is not skilled can easily grasp the state of the mechanical device and smoothly perform handling according to the state.

### <Other Embodiments>

In the present invention, a program or an application for implementing functions of the one or more embodiments described above may be supplied to a system or a device using a network or a storage medium, and a process in which one or more processors in a computer of the system or the device read and execute the program may be implemented.

In addition, it may be implemented by a circuit (for example, an application specific integrated circuit (ASIC) or a field programmable gate array (FPGA)) that implements one or more functions.

In addition, in the description of the present specification, when expressions referred to as terms "first" and "second" are used, the terms "first" and "second" are merely used for the sake of convenience to distinguish from other elements, and are not intended to be construed as being limited to a specific element. Therefore, in accordance with the combination, the number, and the like of the components, the expressions are appropriately replaced.

As described above, the present invention is not limited to the embodiments described above, and combinations of the respective configurations of the embodiments and changes and modifications made by those skilled in the art based on the descriptions in the description and the well-known technique are intended by the present invention and are thus also included within the scope of the present invention to be protected.

As described above, the following matters are disclosed in the present specification.
(1) A state diagnosis system (for example, 100) including:
   an acquisition unit (for example, 101, 103) configured to acquire an image including a diagnosis target;
   a specifying unit (for example, 101) configured to specify, using a learned model configured to receive the image and output a damaged portion and a type of damage of the diagnosis target included in the image, the damaged portion and the type of damage in the image acquired by the acquisition unit; and
   an output unit (for example, 101, 102, 104, 400) configured to output the image acquired by the acquisition unit and the damaged portion and the type of damage specified by the specifying unit in association with each other.
   According to this configuration, it is possible to implement a state diagnosis method for a mechanical device that can be easily introduced and has higher usability. In particular, even a person that is not skilled can easily grasp the state of the mechanical device and smoothly perform handling according to the state.
(2) The state diagnosis system according to (1), further including: a diagnosis unit configured to specify handling with respect to the diagnosis target using the damaged portion and the type of damage in the image acquired by the acquisition unit and output the handling to a user interface screen (for example, 600).
   According to this configuration, it is possible to implement a state diagnosis method for a mechanical device that can be easily introduced and has higher usability. In particular, even a person that is not skilled can easily grasp the state of the mechanical device and smoothly perform handling according to the state.
(3) The state diagnosis system according to (2), further including:
   a determination unit (for example, 101) configured to determine, based on the damaged portion and the type of damage specified by the specifying unit, whether additional measurement with respect to the diagnosis target is necessary;
   a decision unit (for example, 101) configured to decide, when the determination unit determines that the additional measurement is necessary, information of the additional measurement with respect to the diagnosis target according to the damaged portion and the type of damage specified by the specifying unit; and
   a display control unit (for example, 101) configured to display, on the user interface screen (for example, 600), information of the additional measurement decided by the decision unit and a field for inputting an actual measurement value obtained by the additional measurement, in which
   the diagnosis unit is further configured to specify the handling with respect to the diagnosis target using the actual measurement value and output the handling to the user interface screen (for example, 608).
   According to this configuration, the operator can easily grasp the items of the additional measurement to be performed on the diagnosis target. In addition, it is possible to improve the operability when inputting the actual measurement value.
(4) The state diagnosis system according to (3), in which the information of the additional measurement includes lecture information (for example, 700) of the additional measurement with respect to the diagnosis target.
   According to this configuration, the operator can easily grasp the method of the additional measurement necessary for the mechanical device.
(5) The state diagnosis system according to any one of (2) to (4), in which the handling includes at least one of repair or replacement of the diagnosis target.
   According to this configuration, it is possible to easily grasp which of the repair and the replacement should be performed on a damaged mechanical device.
(6) The state diagnosis system according to (5), in which the handling further includes determination of reuse.
   According to this configuration, it is possible to present that the reuse is possible in accordance with the state of the mechanical device, allowing the operator to easily grasp that the mechanical device is reusable.
(7) The state diagnosis system according to any one of (2) to (6), in which the diagnosis unit is further configured to output information obtained when the handling with respect to the diagnosis target is performed to the user interface screen (for example, 609).
   According to this configuration, it is possible to easily grasp the effect achieved when the handling presented with respect to the damaged mechanical device is performed.
(8) The state diagnosis system according to any one of (1) to (7), in which the diagnosis target is a rolling device.
   According to this configuration, it is possible to implement a state diagnosis method for a rolling device that can be easily introduced and has higher usability.
(9) A state diagnosis method including:
   an acquisition step (for example, S202, S301) of acquiring an image including a diagnosis target;
   a specifying step (for example, S206, S302) of specifying, using a learned model configured to receive the image and output a damaged portion and a type of damage of the diagnosis target included in the image, the damaged portion and the type of damage in the image acquired in the acquisition step; and
   an output step (for example, S207, S209, S302) of outputting the image acquired in the acquisition step and the damaged portion and the type of damage specified in the specifying step in association with each other.
   According to this configuration, it is possible to implement a state diagnosis method for a mechanical device that can be easily introduced and has higher usability. In particular, even a person that is not skilled can easily grasp the state of the mechanical device and smoothly perform handling according to the state.
(10) A program for causing a computer (for example, 100) to execute:
   an acquisition unit (for example, 101) configured to acquire an image including a diagnosis target;
   a specifying unit (for example, 101) configured to specify, using a learned model configured to receive the image and output a damaged portion and a type of damage of the diagnosis target included in the image, the damaged portion and the type of damage in the image acquired by the acquisition unit; and
   an output unit (for example, 101) configured to output the image acquired by the acquisition unit and the damaged portion and the type of damage specified by the specifying unit in association with each other.
   According to this configuration, it is possible to implement a state diagnosis method for a mechanical device that can be easily introduced and has higher usability. In particular, even a person that is not skilled can easily grasp the state of the mechanical device and smoothly perform handling according to the state.

Although the embodiment and the variation thereof are described above with reference to the drawings, it is needless to mention that the present invention is not limited to these examples. It is apparent for those skilled in the art to which the present disclosure belongs that various modified examples or corrected examples are conceivable within the scope recited in the claims, and it is understood that the above falls within the technical scope of the present invention. In addition, within the scope not departing from the gist of the invention, each of the components in the above embodiments may be combined in any manner.

The present application is based on a Japanese patent application (No. 2023-210073) filed on December 13, 2023, contents of which are incorporated herein by reference.

### REFERENCE SIGNS LIST

100: terminal device
101: processing unit
102: storage unit
103: imaging unit
104: UI unit
105: communication unit
200: server device
201: processing unit
202: storage unit
203: communication unit
204: input/output unit
300: network

## Claims

1. A state diagnosis system comprising:
an acquisition unit configured to acquire an image including a diagnosis target;
a specifying unit configured to specify, using a learned model configured to receive the image and output a damaged portion and a type of damage of the diagnosis target included in the image, the damaged portion and the type of damage in the image acquired by the acquisition unit; and
an output unit configured to output the image acquired by the acquisition unit and the damaged portion and the type of damage specified by the specifying unit in association with each other.

2. The state diagnosis system according to claim 1, further comprising:
a diagnosis unit configured to specify handling with respect to the diagnosis target using the damaged portion and the type of damage in the image acquired by the acquisition unit and output the handling to a user interface screen.

3. The state diagnosis system according to claim 2, further comprising:
a determination unit configured to determine, based on the damaged portion and the type of damage specified by the specifying unit, whether additional measurement with respect to the diagnosis target is necessary;
a decision unit configured to decide, when the determination unit determines that the additional measurement is necessary, information of the additional measurement with respect to the diagnosis target according to the damaged portion and the type of damage specified by the specifying unit; and
a display control unit configured to display, on the user interface screen, information of the additional measurement decided by the decision unit and a field for inputting an actual measurement value obtained by the additional measurement, wherein
the diagnosis unit is further configured to specify the handling with respect to the diagnosis target using the actual measurement value and output the handling to the user interface screen.

4. The state diagnosis system according to claim 3, wherein
the information of the additional measurement includes lecture information of the additional measurement with respect to the diagnosis target.

5. The state diagnosis system according to claim 2, wherein
the handling includes at least one of repair or replacement of the diagnosis target.

6. The state diagnosis system according to claim 5, wherein
the handling further includes determination of reuse.

7. The state diagnosis system according to claim 2, wherein
the diagnosis unit is further configured to output information obtained when the handling with respect to the diagnosis target is performed to the user interface screen.

8. The state diagnosis system according to claim 1, wherein
the diagnosis target is a rolling device.

9. A state diagnosis method comprising:
an acquisition step of acquiring an image including a diagnosis target;
a specifying step of specifying, using a learned model configured to receive the image and output a damaged portion and a type of damage of the diagnosis target included in the image, the damaged portion and the type of damage in the image acquired in the acquisition step; and
an output step of outputting the image acquired in the acquisition step and the damaged portion and the type of damage specified in the specifying step in association with each other.

10. A program for causing a computer to execute:
an acquisition unit configured to acquire an image including a diagnosis target;
a specifying unit configured to specify, using a learned model configured to receive the image and output a damaged portion and a type of damage of the diagnosis target included in the image, the damaged portion and the type of damage in the image acquired by the acquisition unit; and
an output unit configured to output the image acquired by the acquisition unit and the damaged portion and the type of damage specified by the specifying unit in association with each other.
